# FASCICULE DE BREVET EUROPEEN

(11) **EP 3 295 121 B1**
(45) Date de publication et mention de la délivrance du brevet: **01.05.2019**
(21) Numéro de dépôt: 15730826.3
(22) Date de dépôt: 13.05.2015
(51) Int. Cl.: G01B 11/16

(54) **INSTALLATION DE SURVEILLANCE D' UN OUVRAGE**
ANLAGE ZUR ÜBERWACHUNG EINER STRUKTUR
FACILITY FOR MONITORING A STRUCTURE

(43) Date de publication de la demande: 21.03.2018
(73) Titulaire: Lynxplus SAS, 91430 Igny (FR)
(72) Inventeur: LIETARD, Cyril, 91540 Mennecy (FR)
(74) Mandataire: Cabinet HERRBURGER
(86) Numéro de dépôt international: PCT/FR2015/051248
(87) Numéro de publication internationale: WO 2016/181043

(56) Documents cités:
- WO-A1-90/10193
- DE-A1-102006 027 925
- DE-A1-102009 026 002

## Description

### Domaine de l'invention

La présente invention se rapporte à une installation de surveillance d'un ouvrage et notamment de l'évolution géométrique de l'ouvrage en fonction du temps tel qu'un pont, un barrage, une canalisation, un tunnel, une galerie ou autre ouvrage de ce type, en général intégré dans un site naturel.

### Etat de la technique

Il existe de nombreux types d'installations permettant de surveiller l'évolution d'un ouvrage tel que par exemple un réseau de jauges de contrainte, une série de repères alignés ou répartis sur une certaine courbe appropriée à la forme de l'ouvrage à surveiller. Mais de façon générale, ces différentes installations de surveillance sont très compliquées, nécessitent des travaux de mise en oeuvre importants et ne peuvent se placer très simplement et provisoirement sur un ouvrage à surveiller, notamment un tronçon d'un ouvrage.

DE 10 2006 027 925 A1 décrit une installation de détection d'une déformation anormale d'un toit de bâtiment. Cette installation comprend un câble tendu entre deux parois du bâtiment et une pluralité de modules fixés sur la charpente du toit, chaque module comprenant un capteur optoélectronique de déplacement relatif permettant de générer un signal lors du dépassement d'une valeur seuil.

### But de l'invention

La présente invention a pour but de développer une installation simple de surveillance de l'évolution géométrique d'un ouvrage en fonction du temps, qui soit elle-même de structure simple, soit simple à installer et à démonter, sans gêner l'utilisation de l'ouvrage et permettant d'obtenir des informations très précises sur l'évolution géométrique de l'ouvrage.

### Exposé et avantages de l'invention

A cet effet, l'invention a pour objet une installation de surveillance de l'évolution géométrique d'un ouvrage en fonction du temps selon la revendication 1, comprenant :
- un chemin de mesure du déplacement relatif de différents points de mesure de l'infrastructure,
- le chemin de mesure étant formé d'une succession de modules de capteurs traversés par une ligne de référence constituée par un fil tendu entre un module d'entrée et un module de sortie, solidaires tous deux de l'infrastructure et constituant des points fixes,
- les modules fournissant des signaux de déplacement relatifs de chaque module dans au moins une direction de détection,
- le module d'entrée (Me) fournissant le fil constituant la ligne de référence
- chaque module ayant :
   - un capteur optoélectronique ayant au moins une direction de détection relié à un circuit de traitement pour fournir un signal de déplacement relatif à un instant donné,
   - un dispositif de réglage de la position, et
   - un dispositif de fixation à l'infrastructure.

L'installation selon l'invention a l'avantage d'être d'une réalisation particulièrement simple et de se composer de modules qui peuvent être tous de même structure, à l'exception du module d'entrée et du module de sortie, ce qui permet de réaliser un chemin de mesure comportant un nombre variable de points de mesure, c'est-à-dire de modules associés à des points de mesure, d'un chantier à l'autre.

L'invention s'installe facilement et se démonte tout aussi facilement après avoir effectué une campagne de mesure sur un ouvrage. Les informations recueillies par l'installation peuvent facilement être transmises par une liaison non câblée vers un poste de centralisation qui peut recueillir et traiter de nombreuses telles installations situées dans des sites très différents.

Suivant une autre caractéristique avantageuse, la direction de détection des modules est orientée suivant une même direction de référence.

Bien qu'en principe, on puisse détecter le déplacement relatif du point de mesure de l'infrastructure suivant une direction associée à l'emplacement du point de mesure sur l'infrastructure, il est avantageux de mesurer l'évolution géométrique de l'infrastructure suivant une certaine direction qui peut correspondre à une direction particulièrement intéressante et importante de l'infrastructure.

Suivant une autre caractéristique, tous les modules ont sensiblement la même orientation par rapport au fil tendu formant la ligne de référence, notamment une orientation perpendiculaire à cette direction.

Suivant une autre caractéristique, chaque module a un dispositif d'isolation de vibration par rapport à l'infrastructure.

Cette isolation des vibrations est particulièrement importante si l'infrastructure est soumise à des vibrations fréquentes et importantes comme par exemple si l'infrastructure est un tunnel ou un pont, notamment à usage ferroviaire.

Suivant une autre caractéristique, le module d'entrée comporte un dispositif de mesure de tension du fil tendu et un dispositif d'asservissement asservissant la tension du fil sur une tension de consigne. Cela permet d'effectuer des mesures sur une période prolongée au cours de laquelle la tension initiale du fil tendu pourrait se relâcher sous l'effet de la fatigue ou de causes externes. Suivant une autre caractéristique, au moins certains modules comportent un capteur optoélectronique double mesurant le déplacement relatif du point de mesure dans au moins deux directions de détection.

Cette double détection permet d'avoir une image précise du déplacement relatif des points de mesure par rapport à la ligne de référence considérée comme ligne fixe.

Suivant une autre caractéristique avantageuse, le capteur optoélectronique est un capteur à fourches comportant une branche émettrice et une branche réceptrice détectant la position du fil tendu passant dans le capteur suivant l'orientation de la ligne de détection.

Suivant une autre caractéristique avantageuse, le dispositif de réglage règle la direction du ou des capteurs suivant une direction de référence.

Ce dispositif de réglage peut également permettre de régler le niveau du module à sa première installation, par rapport à la ligne de référence constituée par le fil tendu.

En résumé et globalement, l'installation de surveillance telle que définie ci-dessus permet une surveillance particulièrement simple et efficace de l'évolution de la forme géométrique d'une infrastructure telle qu'un ouvrage de construction.

### Dessins

La présente invention sera décrite de manière plus détaillée à l'aide d'un exemple d'installation destinée à surveiller l'évolution géométrique d'une infrastructure, représenté dans les dessins annexés dans lesquels :
- la figure 1 est un schéma d'ensemble de l'installation équipant une infrastructure,
- la figure 2 est un schéma d'un module d'entrée de l'installation de la figure 1,
- la figure 3 est un schéma d'un module de capteur de l'installation de la figure 1.

### Description de modes de réalisation de l'invention

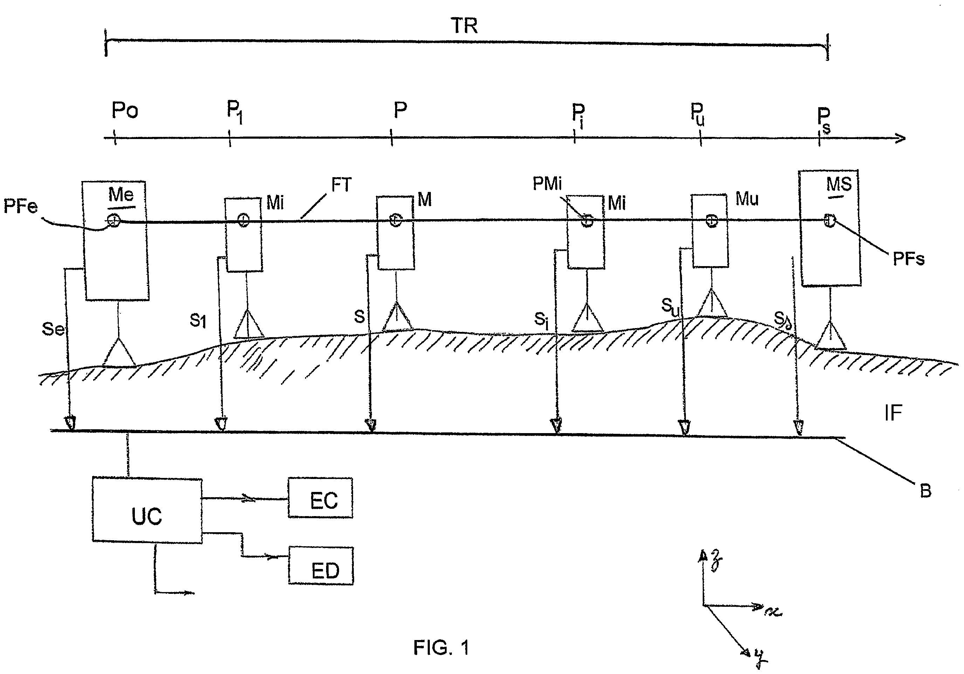

Selon la figure 1, l'installation de surveillance de l'évolution d'une infrastructure est destinée à surveiller ou à suivre l'évolution géométrique d'une infrastructure IF telle qu'un ouvrage (pont, tunnel, galerie) qui évolue ou peut évoluer sous l'effet de causes extérieures dont on ne peut prévoir les effets mais seulement les constater pour ensuite appliquer des contremesures.

L'installation se compose d'un chemin de mesure intégré ou monté sur l'infrastructure pour mesurer les déplacements relatifs de points de mesure PMi répartis le long du tronçon de l'infrastructure IF à surveiller.

L'installation se compose de modules de capteurs Mi traversés par une ligne de référence FT associée à l'infrastructure IF et aptes à mesurer les déplacements des points de mesure PMi. Cette ligne de référence FT, selon l'invention, est constituée par un fil tendu entre un module d'entrée Me et un module de sortie Ms, installés de manière fixe et solidaire à chaque extrémité du tronçon TR de l'infrastructure IF à surveiller.

Les modules de capteurs Mi sont répartis sur le chemin de mesure aux points de mesure PMi (i = 1...n) dont on connaît la position Pi (i = 1 mm) suivant la ligne de mesure. Les modules de capteurs Mi fournissent chacun un signal de mesure Si représentant la variation de position relative (ΔHi, ΔVi) du module de capteur Mi par rapport au point de mesure PMi situé sur la ligne de mesure, c'est-à-dire le fil tendu FT qui est un point fixe alors que le module Mi, solidaire de l'infrastructure, se déplace avec l'infrastructure.

L'installation comporte un bus B auxquels sont reliés les modules Mi, y compris le module d'entrée Me et le cas échéant, le module de sortie Ms, pour transmettre leurs signaux Se, Si...Ss à une unité centrale de traitement UC qui exploite les signaux, les enregistre, affiche les résultats du traitement sur un écran de contrôle EC et plus généralement édite (ED) les résultats ou les transmet à une centrale.

Pour faciliter les explications, un système de coordonnées (x, y, z) a été représenté sur la figure 1. Il s'agit de préférence, mais non nécessairement, d'un système orthogonal dont l'axe (x) est celui de la ligne de référence FT, l'axe (y) correspondant à la direction transversale (par rapport au plan de la figure 1) et l'axe (z) étant l'axe montant, par exemple la direction verticale.

Les modules Mi ou du moins leurs capteurs Ci qui ont une ou deux directions de détection, sont réglés pour que la ou les deux directions de détection correspondent à des directions de référence comme par exemple la direction verticale et la direction horizontale sans que ce choix ne soit impératif.

Cela signifie ainsi que l'orientation du plan de détection dans lequel se situe le point de mesure PMi est de même orientation pour tous les modules Mi pour simplifier le traitement des signaux et l'exploitation des résultats.

On peut toutefois envisager que pour des raisons particulières, tel ou tel point de mesure PMi nécessite la surveillance de son évolution dans un plan ayant une autre orientation que celle des autres module Mi pour mieux cerner l'évolution très locale de ce point de mesure PMi particulier.

Bien que la surveillance de l'évolution des points de mesure PMi soit intéressante dans les deux directions (y, z), il peut suffire dans certains cas de ne surveiller l'évolution que dans une direction (y).

Lors de la mise en place de l'installation de la ligne de référence FT entre les deux modules Me, Ms, les modules de capteurs Mi sont placés et montés aux positions Pi, ce qui peut nécessiter, outre la fixation solidaire des modules Mi à leur point de mesure Pi sur l'infrastructure, de régler également la position des modules Mi par rapport à la ligne de référence FT pour que cette ligne passe dans la plage optimale de chaque capteur Ci en fonction des déplacements relatifs prévisibles mais surtout pour que la ou les deux directions de détection Dd soi(en)t orientée(s) selon les directions de référence, en général les mêmes directions de référence pour tous les modules Mi.

Enfin la mise en place de l'installation peut être complétée par des moyens de protection contre l'influence de l'environnement ou des intempéries.

La description détaillée des modules sera faite ci-après.

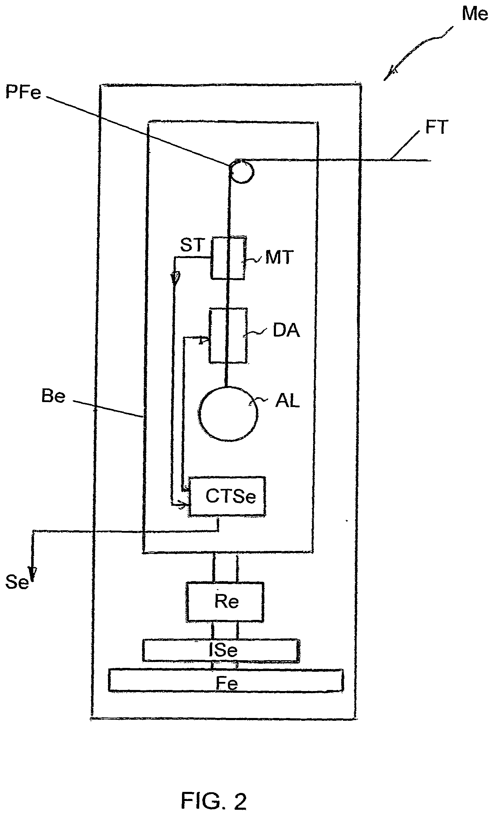

La figure 2 est un schéma d'un module d'entrée Me installé à l'une des extrémités du tronçon surveillé TR. Le module Me se compose d'un boîtier Be muni d'un dispositif de fixation Fe à l'infrastructure IF pour le solidariser au moins pendant la période de mesure à l'infrastructure, à la position Po considérée comme point fixe.

Le dispositif de fixation Fe est isolé du boîtier Be du module par un organe d'isolation ISe pour filtrer les vibrations de l'infrastructure IF et réduire leur transmission au boîtier.

Un dispositif de réglage Re permet de régler ensuite la position du boîtier, si besoin est. Le module Me comporte un point fixe PFe définissant le début de la ligne de référence qui est le point d'émission du fil tendu FT.

Le fil est fourni par une alimentation AL reliée au point fixe FPe par un dispositif d'asservissement DA de la tension du fil sur une tension de consigne T₀.

La tension du fil est mesurée par un dispositif de mesure de tension MT qui fournit un signal de tension ST à un circuit de traitement CTSe commandant l'asservissement de la tension sur la consigne T₀.

Le signal de tension ST peut également être fourni par le bus B à l'unité centrale UC qui commande alors l'asservissement.

Le module de sortie Ms installé à l'autre extrémité du tronçon à surveiller TR est semblable au module d'entrée Ms mais sans l'alimentation en fil, remplacée par un simple point de fixation du fil constituant le point fixe de sortie PFs et sans asservissement de tension.

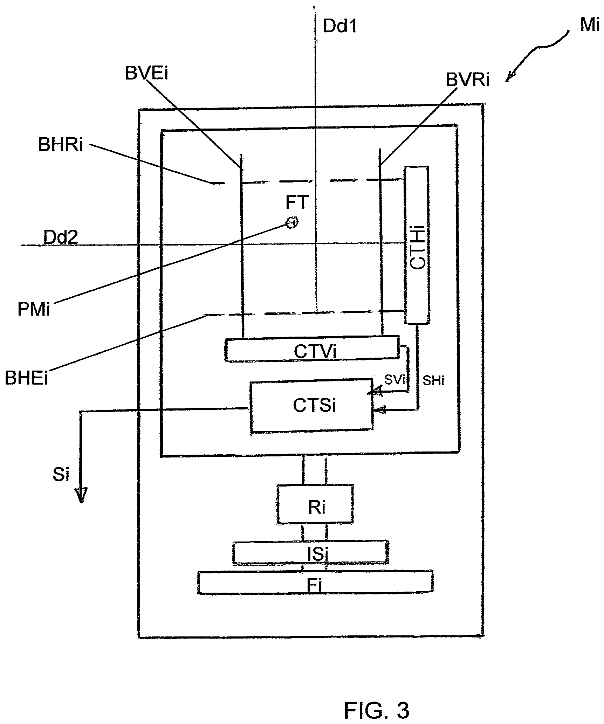

Selon la figure 3, le module de capteur Mi se compose comme les autres modules Me, Ms, d'un dispositif de fixation Fi à l'infrastructure IF avec un dispositif d'isolation des vibrations ISi et un dispositif de réglage de position Ri.

Le dispositif de réglage Ri réalise non seulement le réglage initial pour positionner le champ de détection autour du point de mesure PMi de ce module Mi mais surtout le réglage de l'orientation de la ou des lignes de détection Dd1, Dd2 suivant les lignes de référence.

Le module Mi comporte un ou deux capteurs optoélectroniques à fourches pour détecter les variations de position relatives ΔHi, ΔDi du capteur (module Mi) par rapport à la ligne de référence constituée par le fil tendu FT.

Pour détecter le mouvement suivant une direction, le capteur Ci se compose de deux branches BVEi, BVRi formant une fourchette dans laquelle passe le fil tendu FT, c'est-à-dire la où se trouve le point de mesure PMi constitué par l'intersection du fil tendu avec le plan de détection du capteur. Le capteur Ci pourra détecter la position dans la direction de détection Dd1 et donner la variation relative ΔHi (t) en fonction du temps (t).

Pour cela, après la mise en place des modules Mi et leur réglage, on mesure la position du point de mesure PMi dans chaque module Mi. Cette position du point de mesure PMi (to) à l'instant initial de la campagne de mesure constitue la position de référence de chaque point de mesure par rapport à laquelle se mesurent les variations de la position relative du point de mesure PMi en fonction du temps (t).

La mesure des déplacements relatifs est indépendante de la flèche inévitable du fil tendu car cette flèche est maintenue invariable par l'asservissement de la tension du fil à une valeur de consigne.

Dans le cas d'un capteur CVi, CHi travaillant dans deux directions de mesure Dd1, Dd2, la situation est la même mais simplement dédoublée, donnant deux différences de mesure ΔHi, ΔDi ou déplacements relatifs dans les deux directions de détection.

Selon la figure 3, chaque capteur optoélectronique à fourchettes Ci, CVi, CHi comporte deux branches, une branche d'émission BVEi, BHEi et une branche de réception PVRi, BHVi, constituées respectivement par un alignement de photodiodes émettrices et de photodiodes réceptrices qui se correspondent et sont identifiées de manière à coopérer. L'intersection du faisceau par le fil tendu entre une ou plusieurs diodes photoémettrices et les diodes photoréceptrices correspondantes donne le signal de position de l'obstacle coupant le ou les faisceaux dans la direction de détection, c'est-à-dire la position du fil tendu ou point de mesure PMi.

Les capteurs Ci, CVi, CHi comportent un circuit de traitement CTVᵢ, CTHi associé à chacune des fourchettes de capteur (CVi, CHi) pour chacune des deux directions de détection Dd1, Dd2. Les circuits traitent le signal de détection pour fournir chaque fois des signaux traités SVi, SHi à un circuit de traitement de sortie CTSi relié par le bus à l'unité centrale UC auquel il envoie le signal complexe Si du module Mi et qui exploite les signaux et génère les mesures.

Selon une variante, les modules Me, Mi et le cas échéant Ms sont reliés par une liaison radio à l'unité centrale pour lui fournir ainsi les signaux. Cette solution remplace le bus B par les liaisons radio de sorte que l'installation se monte plus simplement au seul prix d'une alimentation autonome de chacun des modules.

L'unité centrale peut se situer à proximité de l'installation, par exemple dans le module d'entrée Me pour ensuite transmettre les signaux traités également par une liaison radio à un récepteur dans une installation centralisée.

### NOMENCLATURE

- AL: Alimentation en fil
- B: Bus de liaison
- Be: Boîtier du module d'entrée Me
- BHEi: Branche d'émetteur du capteur CHi
- BHRi: Branche de récepteur du capteur CHi
- BVEi: Branche d'émetteur du capteur CVi
- BVRi: Branche de récepteur du capteur CVi
- CHi: Capteur
- Ci: Capteur
- CTHi: Circuit de traitement du signal du capteur
- CTVi: Circuit de traitement du signal du capteur CVi
- CTSi: Circuit de traitement de sortie du signal Si du module Mi
- CVi: Capteur
- DA: Dispositif d'asservissement de tension
- Dd1, Dd2: Direction d'action des capteurs
- Fe: Dispositif de fixation du module Me à l'infrastructure
- Fi: Dispositif de fixation du module Mi à l'infrastructure
- FS: Dispositif de fixation du module de sortie à l'infrastructure
- FT: Fil tendu/ligne de référence
- IF: Infrastructure
- ISe: Dispositif d'isolation de vibration
- ISs: Dispositif d'isolation de vibration du module de sortie
- ISi: Dispositif d'isolation de vibration du module Mi
- Me: Module d'entrée
- Ms: Module de sortie
- M1...Mi...Mn: Module de capteur
- MT: Dispositif de mesure de tension
- PFe: Point fixe d'entrée
- PFs: Point fixe de sortie
- PMi: Point de mesure du module Mi
- PO...PS: Position des modules de l'installation sur la ligne de mesure
- Re: Dispositif de réglage de la position du module d'entrée
- Ri: Dispositif de réglage de la position du module Mi
- Rs: Dispositif de réglage de la position du module de sortie
- Se, S1, Si, Sn, Ss: Signaux fournis par les modules Me...Ms
- SHi: Signal de sortie du circuit de traitement CHi
- Si: Signal de sortie du module Mi
- SVi: Signal de sortie du circuit CTVi
- TR: Tronçon de l'infrastructure à surveiller
- UC: Unité centrale de traitement

## Revendications

1. Installation de surveillance de l'évolution géométrique d'un ouvrage en fonction du temps, installation **caractérisée en ce qu'**elle comprend :
- un chemin de mesure du déplacement relatif de différents points de mesure (PMi) de l'infrastructure (IF),
- le chemin de mesure étant formé d'une succession de modules de capteurs (Mi) traversés par une ligne de référence (FT) constituée par un fil tendu entre un module d'entrée (Me) et un module de sortie (Ms), solidaires tous deux de l'infrastructure et constituant des points fixes (PFe, PFs),
- les modules (Mi) fournissant des signaux de déplacement relatifs de chaque module par rapport à la ligne de référence constituée par le fil tendu dans au moins une direction de détection (Dd),
- le module d'entrée (Me) fournissant le fil constituant la ligne de référence (FT)
- chaque module (Mi) ayant :
- un capteur optoélectronique (Ci) ayant au moins une direction de détection (Dd) relié à un circuit de traitement pour fournir un signal de déplacement relatif (Si) en fonction du temps (t),
- un dispositif de réglage (Ri) de la position, et
- un dispositif de fixation à l'infrastructure (IF).

2. Installation selon la revendication 1, **caractérisée en ce que** la direction de détection (Dd) des modules (Mi) est orientée suivant une même direction de référence.

3. Installation selon la revendication 1, **caractérisée en ce que** tous les modules (Mi) ont sensiblement de même orientation par rapport au fil tendu (FT) formant la ligne de référence, notamment une orientation perpendiculaire à cette direction,

4. Installation selon la revendication 1, **caractérisée en ce que**
chaque module (Mi, Me, Ms) a un dispositif d'isolation de vibrations (ISi, ISe) par rapport à l'infrastructure (IF).

5. Installation selon la revendication 1,
**caractérisée en ce que**
le module d'entrée (Me) comporte un dispositif de mesure de tension (MT) du fil tendu et un dispositif d'asservissement (DA) asservissant la tension du fil sur une tension de consigne (T₀),

6. Installation selon la revendication 1,
**caractérisée en ce qu'**
au moins certains modules (Mi) comportent un capteur optoélectronique double (CVi, CHi) mesurant le déplacement relatif du point de mesure (PMi) dans au moins deux directions de détection (Dd1, Dd2).

7. Installation selon la revendication 1,
**caractérisée en ce que**
le capteur optoélectronique (Ci, CVi, CHi) est un capteur optoélectronique à fourches comportant une branche émettrice (BVEi, BHEi) et une branche réceptrice (BVRi, BVHi) détectant la position du fil tendu (FT) passant dans le capteur suivant l'orientation de sa ligne de détection (Dd1, Dd2).

8. Installation selon la revendication 1,
**caractérisée en ce que**
le dispositif de réglage (Ri) règle la direction de détection (D_{d}) du capteur (Ci)/des capteurs (CVi, CHi) suivant une direction de référence respective.

## Patentansprüche

1. Anlage zur Überwachung der geometrischen Entwicklung einer Struktur abhängig von der Zeit,
welche Anlage **dadurch gekennzeichnet ist, dass** sie umfasst:
- eine Strecke zum Messen der Relativbewegung unterschiedlicher Messpunkten (PMi) der Infrastruktur (IF),
- wobei die Strecke zum Messen durch eine Folge von Sensormodulen (Mi) gebildet ist, die von einer Referenzlinie (FT) durchquert wird, welche durch einen Faden gebildet ist, der zwischen einem Eingangsmodul (Me) und einem Ausgangsmodul (Ms) gespannt ist, die beide fest mit der Infrastruktur verbunden sind und feste Punkte (PFe, PFs) bilden,
- wobei die Module (Mi) Signale der Relativbewegung jedes Moduls gegenüber der Referenzlinie, welche durch den gespannten Faden gebildet ist, in mindestens einer Detektionsrichtung (Dd) liefern,
- wobei das Eingangsmodul (Me) den Faden bereitstellt, der die Referenzlinie (FT) bildet,
- wobei jedes Modul (Mi) aufweist:
- einen optoelektronischen Sensor (Ci), der mindestens eine Detektionsrichtung (Dd) aufweist und mit einer Bearbeitungsschaltung verbunden ist, um ein Relativbewegungssignal (Si) abhängig von der Zeit (t) zu liefern,
- eine Vorrichtung zur Regelung (Ri) der Position, und
- eine Vorrichtung zur Befestigung an der Infrastruktur (IF).

2. Anlage gemäß Anspruch 1,
**dadurch gekennzeichnet, dass**
die Detektionsrichtungen (Dd) der Module (Mi) in einer gleichen Referenzrichtung ausgerichtet sind.

3. Anlage gemäß Anspruch 1,
**dadurch gekennzeichnet, dass**
alle Module (Mi) im Wesentlichen die gleiche Ausrichtung gegenüber dem gespannten Faden (FT) aufweisen, welcher die Referenzlinie bildet, insbesondere eine Ausrichtung, welche senkrecht zu dieser Richtung läuft.

4. Anlage gemäß Anspruch 1,
**dadurch gekennzeichnet, dass**
jedes Modul (Mi, Me, Ms) eine Isolierungsvorrichtung für Schwankungen (ISi, Ise) gegenüber der Infrastruktur (IF) aufweist.

5. Anlage gemäß Anspruch 1,
**dadurch gekennzeichnet, dass**
das Eingangsmodul (Me) eine Vorrichtung zur Messung der Spannung (MT) des gespannten Fadens und eine Regelvorrichtung (DA) umfasst, welche die Fadenspannung auf eine SollSpannung (To) regelt.

6. Anlage gemäß Anspruch 1,
**dadurch gekennzeichnet, dass**
mindestens einige der Module (Mi) einen doppelten optoelektronischen Sensor (CVi, Chi) umfassen, welcher die Relativbewegung des Messpunktes (PMi) in mindestens zwei Detektionsrichtungen (Dd1, Dd2) misst.

7. Anlage gemäß Anspruch 1,
**dadurch gekennzeichnet, dass**
der optoelektronische Sensor (Ci, CVi, CHi) als ein gegabelter optoelektronischer Sensor ausgebildet ist, der einen Senderarm (BVEi, BHEi) und einen Empfangsarm (BVRi, BVHi) umfasst, die die Position des gespannten Fadens (FT) detektieren, welcher den Sensor in der Ausrichtung seiner Detektionslinie (Dd1, Dd2) durchläuft.

8. Anlage gemäß Anspruch 1,
**dadurch gekennzeichnet, dass**
die Regelvorrichtung (Ri) die Detektionsrichtung (Dd) des Sensors (Ci)/der Sensoren (CVi, CHi) in einer jeweiligen Referenzrichtung regelt.

## Claims

1. Apparatus for monitoring the geometric development of a structure over time, said apparatus **characterised in that** it comprises:
- a path for measuring the relative movement of different measurement points (PMi) of the infrastructure (IF),
- the measurement path being formed by a succession of sensor modules (Mi) traversed by a reference line (FT) formed by a wire tensioned between an input module (Me) and an output module (Ms), both of which are rigidly connected to the infrastructure and constitute fixed points (PFe, PFs),
- the modules (Mi) providing relative movement signals for each module, with respect to the reference line formed by the tensioned wire, in at least one detection direction (Dd),
- the input module (Me) providing the wire consisting of the reference line (FT)
- each module (Mi) having:
- an optoelectronic sensor (Ci) which has at least one detection direction (Dd) and which is connected to a processing circuit in order to provide a relative movement signal (Si) over time (t),
- a device for controlling (Ri) the position, and
- a device for fixing to the infrastructure (IF).

2. Apparatus according to claim 1, **characterised in that** the detection direction (Dd) of the modules (Mi) is oriented in the same reference direction.

3. Apparatus according to claim 1, **characterised in that** all the modules (Mi) have substantially the same orientation with respect to the tensioned wire (FT) forming the reference line, in particular an orientation that is perpendicular to said direction.

4. Apparatus according to claim 1, **characterised in that** each module (Mi, Me, Ms) has a device for isolating vibrations (ISi, ISe) with respect to the infrastructure (IF).

5. Apparatus according to claim 1, **characterised in that** the input module (Me) comprises a device (MT) for measuring the tension in the tensioned wire and a feedback control device (DA) for controlling the tension of the wire to a set tension (T₀).

6. Apparatus according to claim 1, **characterised in that** at least some modules (Mi) comprise a dual optoelectronic sensor (CVi, CHi) which measures the relative movement of the measurement point (PMi) in at least two detection directions (Dd1, Dd2).

7. Apparatus according to claim 1, **characterised in that** the optoelectronic sensor (Ci, CVi, CHi) is an optoelectronic fork sensor which comprises a transmission branch (BVEi, BHEi) and a reception branch (BVRi), BVHi) and which detects the position of the tensioned wire (FT) passing through the sensor according to the orientation of its detection line (Dd1, Dd2).

8. Apparatus according to claim 1, **characterised in that** the control device (Ri) controls the detection direction (D_{d}) of the sensor (Ci)/sensors (CVi, CHi) according to a relevant reference direction.
